# EUROPÄISCHE PATENTSCHRIFT

(11) **EP 0 438 065 B1**
(45) Veröffentlichungstag und Bekanntmachung des Hinweises auf die Patenterteilung: **10.11.1993**
(21) Anmeldenummer: 91100163.4
(22) Anmeldetag: 07.01.1991
(51) Int. Cl.: G01L 19/00, B65H 7/16, F16K 37/00

(54) **Einschraubenventilkörper-Bausatz, insbesondere für ein Drosselventil**
Threaded valve assembly, especially for a flow control valve
Assemblage de soupape fileté, notamment pour une soupape d'étranglement

(30) Priorität: 17.01.1990 DE 4001170
(43) Veröffentlichungstag der Anmeldung: 24.07.1991
(73) Patentinhaber: MAN Roland Druckmaschinen AG, 63012 Offenbach (DE)
(72) Erfinder: Ortner, Robert, W-8755 Alzenau 4 (DE); Pietsch, Erich, W-6050 Offenbach / Main (DE)
(74) Vertreter: Marek, Joachim, Dipl.-Ing.

(56) Entgegenhaltungen:
- DE-A- 2 544 518
- DE-A- 2 725 575
- DE-A- 3 119 858
- US-A- 3 426 963

## Beschreibung

Die Erfindung betrifft einen Einschraubventilkörper-Bausatz, insbesondere für ein Drosselventil zur Steuerung des Luftstromes für Verbraucher in der Bogenanlage von Druckmaschinen, z.B. Blas-Sog-Elemente, nach dem Oberbegriff des ersten Schutzanspruches Eine Vorrichtung mit solchen Blas-Sog-Elementen ist zum Beispiel aus US-A-3 426 963 bekannt.

Einschraubventilkörper, die z.B. in eine Gewindebohrung eines Drosselventils einschraubbar sind, um nach Maßgabe des Spaltes zwischen einem Drosselkonus und einem Drosselsitz eine Strömung in Strömungsrichtung von einem Strömungskanal zu einem weiteren Strömungskanal zu drosseln, sind bereits in vielfältiger Bauweise aus der Praxis bekannt.

Dabei ändern bekanntlich Drosselventile ihren Durchfluß in Abhängigkeit von der Druckdifferenz, die zwischen den Drücken vor und hinter der Querschnittsverengung entsteht.

Zur Druckmessung werden üblicherweise Manometer verwendet, die vorzugsweise über eine besondere Leitung angeschlossen sind.

Die Kontrolle des Druckes ermöglicht es, die Einstellung der Ventile nach Erfahrungswerten auf unterschiedliche Parameter, z.B. Papierqualität, der Maschinengeschwindigkeit z.B. in der Bogenanlage von Druckmaschinen vorzunehmen.

Die üblichen Manometer sind dabei so gebaut und angeschlossen, daß sie z.B. als Membranfeder-, Rohrfeder- oder Kapselmeßgeräte direkt mit dem zu messenden Medium, hier der Luft in Verbindung stehen, wobei sich der zu messende Druck des Mediums bis zum Ende der Meßfeder hin fortsetzt.

Aufgabe der Erfindung ist es, einen Einschraubventilkörper-Bausatz für ein Drosselventil zu schaffen, der es ermöglicht, die Druckeinstellung und die Druckanzeige einander besser räumlich zuzuordnen.

Gelöst wird diese Aufgabe gemäß dem kennzeichnenden Teil des ersten Anspruches. Weiterbildungen ergeben sich aus dem Unteranspruch in Verbindung mit der Zeichnung und der Beschreibung.

In der Zeichnung ist der Erfindungsgegenstand in einem Ausführungsbeispiel dargestellt.

Es zeigt:

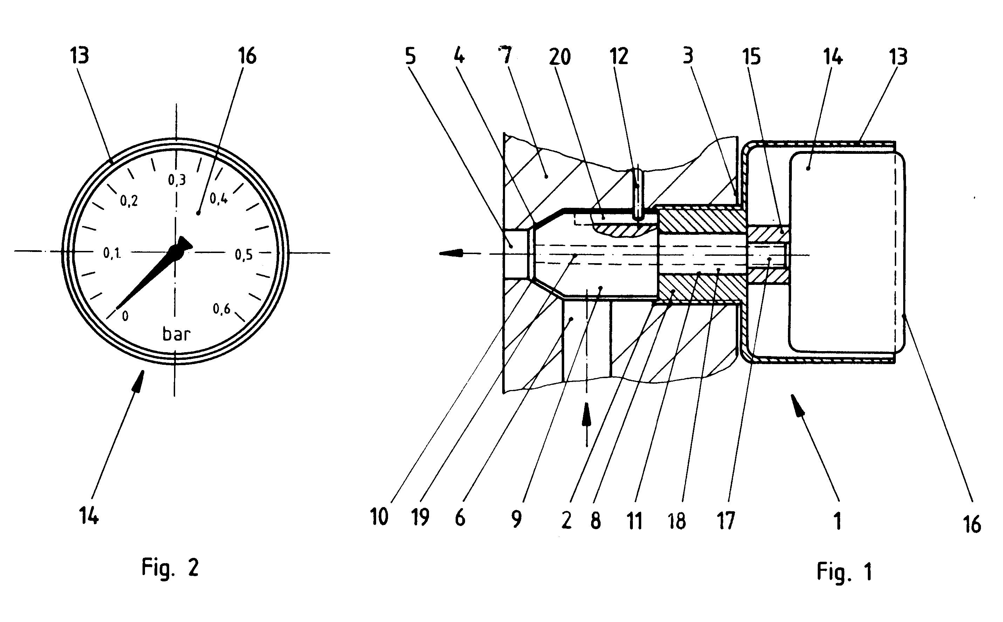

- Fig. 1: einen Längsschnitt durch einen Einschraubventilkörper-Bausatz in der Gewindebohrung eines Drosselventiles, das für eine bestimmte Ventilfunktion ausgelegt ist,
- Fig. 2: eine Draufsicht auf den Einschraubventilkörper-Bausatz nach Fig. 1.

Der Einschraubventilkörper-Bausatz 1 besteht aus einem Einschraubkörper 8, der in eine Gewindebohrung 2 in das Ventilgehäuse 7 einschraubbar ist. Die Gewindebohrung 2 ist an ihrem Einschraubende 3 offen, während ihr dem Einschraubende 3 gegenüberliegendes axiales Ende über einen Kanal zu einem konischen Drosselsitz 4 in einen ersten Strömungskanal 5 übergeführt ist, der in etwa in axialer Verlängerung zur Gewindebohrung 2 verläuft. Durch den Drosselsitz 4 vom ersten Strömungskanal 5 getrennt, mündet in die Gewindebohrung 2 ein zweiter Strömungskanal 6 seitlich ein. In der Zeichnung ist nicht dargestellt, aber durchaus vorstellbar, daß weitere Strömungskanäle einmünden können.

Der Einschraubkörper 8 weist außerhalb des Ventilgehäuses 7 topfartig erweitert ein Gehäuse 13 auf, in dem das runde und zylindrische Gehäuse eines üblichen Manometers 14 so aufgenommen ist, daß dessen Zifferblatt 16 leicht ablesbar ist. Vom Manometer 14 führt eine zur Gewindebohrung 2 koaxiale und entlang der Achse des Ventilschiebers 9 verlaufende kapillare Bohrung 19 zum ersten Strömungskanal 5. Die dem Zifferblatt 16 gegenüberliegende Rückseite des Manometers 14 weist zentrisch ein Kupplungsstück 15 auf, in dem am Einschraubende der Gewindebohrung 2 ein erster am Ventilschieber 9 angeformter Zapfen 17 druckdicht eingepreßt ist.

In Richtung des konischen Drosselsitzes 4 ist dem ersten Zapfen 17 nachfolgend ein zweiter Zapfen 18 am Ventilschieber 9 angeformt, der in einer zur Gewindebohrung 2 koaxialen Bohrung 11 des Einschraubkörpers 8 lose drehbar gelagert ist. Das den Drosselkonus 10 aufweisende Vorderteil des Ventilschiebers 9 wird durch eine darin angebrachte Nut 20, die in axialer Verlängerung der Gewindebohrung 2 verläuft, an einem seitlich einmündenden Stift 12 geführt, der im Ventilgehäuse 7 befestigt ist. Bei der Veränderung des Drosselspaltes und somit der Druckänderung vor und nach der Drosselstelle beim Verdrehen des Einschraubkörpers 8 führt somit das Manometer 14 die axiale Bewegung des Ventilschiebers 9 mit aus, ohne seine Anzeigelage zu ändern.

Beim Hineinschrauben des Einschraubkörpers 8 in das Ventilgehäuse 1 wird der Ventilschieber 9 durch die innere Stirnseite des Einschraubkörpers 8 mitgenommen, während beim Herausschrauben des Einschraubkörpers 8 die mit dem Kupplungsstück 15 zusammen wirkende äußere Seite des Einschraubkörpers 8 das Manometer 14 und zugleich den am Kupplungsstück 15 befestigten Ventilschieber 9 mitnimmt. Somit bewegt sich der Einschraubkörper 8 entsprechend dem Schraubgewinde in der Gewindebohrung 2 in axialer Richtung und in Umfangsrichtung, während der Ventilschieber 9 gemeinsam mit dem Manometer 14 eine axiale Bewegung in Richtung der Gewindebohrung 2, aber keine Drehbewegung ausführen kann.

Der Einschraubventilkörper-Bausatz 1 ist nicht auf die in der Zeichnung dargestellte Bauart eines Drosselventils und somit auf dessen Ventilfunktion beschränkt, sondern läßt sich vergleichbaren Ventilen zuordnen, in die dieser Bausatz oder ein vergleichbarer Einschraubventilkörper-Bausatz einschraubbar ist, dem erfindungsgemäß ein Manometer 14 zugeordnet ist.

Mittels der Kapillarbohrung 19 wird der absolute Druck im ersten Strömungskanal 5 gemessen, der sich je nach eingestellter Drosselung einstellt und auf dem Zifferblatt 16 des Manometers 14 unmittelbar am Einschraubkörper 8 des Einschraubventilkörper-Bausatzes 1 angezeigt.

## Patentansprüche

1. Einschraubventilkörper-Bausatz (1) insbesondere für ein Drosselventil zur Steuerung des Luftstromes für Verbraucher in der Bogenanlage von bogenverarbeitenden Druckmaschinen, mit einem Einschraubventilkörper (8), der in eine Gewindebohrung (2) des Ventilgehäuses (7) einschraubbar ist, die an ihrem Einschraubende (3) offen ist, während ihr dem Einschraubende gegenüberliegendes axiales Ende über einen konischen Drosselsitz (4) in einen ersten Strömungskanal (5) übergeführt ist, der in etwa in axialer Verlängerung der Gewindebohrung (2) verläuft und in den ein zweiter Strömungskanal (6) seitlich einmündet,
**dadurch gekennzeichnet**,
daß der Einschraubventilkörper-Bausatz (1) einen Einschraubkörper (8) mit einem außerhalb des Ventilgehäuses (7) topfartigen Gehäuse (13) aufweist, in dem das runde und zylindrische Gehäuse eines üblichen Manometers (14) so aufgenommen ist, daß dessen Zifferblatt (16) in der Draufsicht ablesbar ist, daß vom Manometer (14) eine zur Gewindebohrung (2) koaxiale entlang der Achse eines Ventilschiebers (9) verlaufende kapillare Bohrung (19) zum ersten Strömungskanal (5) geführt ist, daß die dem Zifferblatt (16) gegenüberliegende Rückseite des Manometers (14) zentrisch ein Kupplungsstück (15) aufweist, in dem ein erster am Ventilschieber (9) angeformter Zapfen (17) druckdicht eingepreßt ist, daß in Richtung des konischen Drosselsitzes (4) dem ersten Zapfen (17) nachfolgend ein zweiter Zapfen (18) am Ventilschieber (9) angeformt ist, der drehbar in einer zur Gewindebohrung (2) koaxialen Bohrung (11) des Einschraubkörpers (8) gelagert ist und daß schließlich das den Drosselkonus (10) aufweisende Vorderteil des Ventilschiebers (9) mittels einer Nut (20) in axialer Verlängerung der Gewindebohrung (2) an einem Stift (12) geführt ist, der im Ventilgehäuse (7) befestigt ist, so daß bei der Veränderung des Drosselspaltes und damit verbunden der Drücke vor und nach der Drosselstelle beim Verdrehen des Einschraubkörpers (8) das Manometer (14) die axiale Bewegung des Ventilschiebers (9) mit ausführt, ohne dabei seine Anzeigelage zu ändern.

2. Einschraubventilkörper-Bausatz nach Anspruch 1, **dadurch gekennzeichnet**, daß als Manometer (14) ein Feder-Manometer vorgesehen ist.

## Claims

1. Threaded valve assembly (1) particularly for a throttle valve to control the air stream for users in the sheet feeder of sheet treating printing presses, with a threaded valve body (8) which can be threaded into a threaded bore (2) of the valve housing (7), which is open at its screwing-in end (3) while its axial end lying opposite the screwing-in end merges via a conical throttle seat (4) into a first flow channel (5) which runs approximately at an axial prolongation of the threaded bore (2) and into which a second flow channel (6) opens laterally, characterised in that the threaded valve assembly (1) has a threaded body (8) with a pot-like housing (13) around the valve housing (7), in that the round and cylindrical housing of a customary manometer is so received that its dial is readable in plan, that from the manometer (14) a capillary bore (19) coaxial to the threaded bore (2) running along the axis of a valve slide (9) is guided to the first flow channel (5), that the rear side of the manometer (14) lying opposite the dial (16) has centrally a connection piece (15) into which a first post (17) formed on the valve slide (9) is pressed in in pressure tight fashion, that in the direction of the conical throttle seating (4) following the first post (17) a second post (18) is formed on the valve slide (9), which is mounted rotatably in a bore (11) of the threaded body (8) coaxial to the threaded bore (2) and that finally the front part of the valve slide (9) having the throttle cone (10) is guided by means of a groove (20) in the axial prolongation of the threaded bore (2) on a post (12) which is fixed in the valve housing (7), so that on alteration of the throttle gap and connected therewith the pressures before and after the throttle position on turning the threaded body (8) the manometer (14) carries out the axial movement with the valve slide (9) without thereby changing its indicator position.

2. Threaded valve assembly according to Claim 1, characterised in that a spring manometer is provided as manometer (14).

## Revendications

1. Ensemble (1) de corps de soupape fileté, en particulier pour une soupape d'étranglement pour commander le flux d'air pour le récepteur dans le margeur d'imprimantes traitant des feuilles, comportant un corps de soupape fileté (8), qui peut être vissé dans un perçage taraudé (2) du boîtier de soupape (7), qui est ouvert à son extrémité filetée (3), tandis que son extrémité axiale opposée à l'extrémité filetée est transformée, par l'intermédiaire d'un siège d'étranglement conique (4), en un premier canal d'écoulement (5) qui s'étend à peu près dans le prolongement axial du perçage taraudé (2) et dans lequel débouche latéralement un second canal d'écoulement (6),
caractérisé en ce que l'ensemble (1) du corps de soupape fileté présente un corps fileté (8) comportant un boîtier (13) en forme de cuvette à l'extérieur du boîtier de soupape (7), dans lequel le boîtier rond et cylindrique d'un manomètre usuel (14) est reçu de sorte que son cadran (16) peut être lu en vue de dessus, en ce que, du manomètre (14), un perçage capillaire (19) s'étendant le long de l'axe d'un coulisseau de soupape (9) et coaxial au perçage taraudé (2) est guidé vers le premier canal d'écoulement (5), en ce que le dos, opposé au cadran (16), du manomètre (14) présente, de façon centrale, une pièce de couplage (15) dans laquelle est emmanché, de façon étanche à la pression, un premier tourillon (17) formé sur le coulisseau de soupape (9), en ce que, en direction du siège d'étranglement conique (4) en aval du premier tourillon (17), est formé un second tourillon (18) sur le coulisseau de soupape (9), qui est monté rotatif dans un perçage (11), coaxial au perçage taraudé (2), du corps fileté (8), et en ce que, enfin, la partie avant, présentant le cône d'étranglement (10), du coulisseau de soupape (9) est guidée sur une broche (12) dans le prolongement axial du perçage taraudé (2) au moyen d'une gorge (20), broche qui est fixée dans le boîtier de soupape (7), de sorte que, lorsque la fente d'étranglement varie et, ainsi, les pressions avant et après le point d'étranglement, lors de la rotation du corps fileté (8), le manomètre (14) effectue le mouvement axial du coulisseau de soupape (9) sans modifier sa position d'affichage.

2. Ensemble de corps de soupape fileté selon la revendication 1,
caractérisé en ce que, en tant que manomètre (14), un manomètre à ressorts est prévu.
